# EUROPEAN PATENT APPLICATION

(11) **EP 1 038 840 A2**
(43) Date of publication of application: **27.09.2000**
(21) Application number: 00650020.1
(22) Date of filing: 20.03.2000
(51) Int. Cl.: C02F 1/78, C02F 11/12

(54) **A water treatment system**

(30) Priority: 19.03.1999 IE 990227
(71) Applicant: Fay, James Constantine, Dublin 15 (IE); Fay, David, Dublin 15 (IE); Fay, Graham, Dublin 15 (IE)
(72) Inventor: Fay, James Constantine, Dublin 15 (IE); Fay, David, Dublin 15 (IE); Fay, Graham, Dublin 15 (IE)
(74) Representative: O'Connor, Donal Henry

(57) **Abstract**

The invention provides a method and a plant for purifying surface water. An initial filtration of raw water from a lake in a microfilter (6). The filtrate from the microfilter (6) is dosed with hydrogen peroxide from a dosing tank (9) and is then delivered into an ozone reactor vessel (8) where it is subjected to ozone. The contents of the ozone reactor vessel is then filtered in a final filter assembly (20) and delivered out the final filtrate outlet (24). Any surface ozone in the ozone reactor vessel is sent to a sludge storage tank (3) where the sludge and backwater washing of the various filters are stored. The surface ozone then disinfects the sludge for subsequent use.

## Description

The present invention relates to the treatment of water and in particular to the treatment of surface water to produce a water that is acceptable for drinking.

The invention is particularly directed towards producing drinking water without the necessity to use or add any chemicals which would be likely to lead to the production of residual chemicals in the filtrate or produce a chemical laden sludge.

Under EU Regulations, it is required to reduce the "colour" of potable water to a standard acceptable to the consumer, which relates not alone to solids and suspensions such as algae, but also to reduce colour in colloidal form as a result of the presence of humic and fulvic acids and other naturally occurring compounds. The raw water could look clear and appear to be perfectly acceptable for drinking, but may not necessarily be fit for human consumption in accordance with EU drinking water standards.

It is also desirable to reduce the amount of manganese and iron in such waters. Generally speaking, these so-called surface waters come from natural lakes and rivers, but equally well could come from reservoirs and other storage areas. Indeed many of the storage areas are natural lakes which are effectively preserved for drinking water. However, no matter how well they are preserved, they are still subject to the elements and the general environment and thus it is necessary to ensure that they are of an acceptable standard for drinking in accordance with EU drinking water directives.

In particular there are usually trace metallic elements which can cause considerable difficulty.

A further problem that has arisen is the increasing incidence of Cryptosporidium and Giardia a pathogenic organism present in water supplies emanating from rodents, deer and sheep as well as other pathogens which are very harmful to humans. This has caused a considerable problem with the subsequent disposal of sludge. The problem is that the oocysts are often less than 5 microns in size and therefore can be taken out in many a water treatment system prior to having any sterilisation or other treatment. This means therefore that the harmful pathogens are untreated in the eventual sludge.

It is known to treat such water by the addition of chemicals, for example an aluminium sulphate solution, or a solution of ferric sulphate which will coagulate solids and colours in the raw water to form flocs. It is known to further assist the treatment process at times when the flocs produced are small commonly called "pin head" flocs by adding amounts of a flocculating agent for example polyelectrolyte to increase the floc size and to improve the ability to handle these floc's in a more robust fashion.

From the flocculation stage, the following procedures are employed to separate the flocs from the liquid, by settlement in settlement tanks where the floc is withdrawn by gravity as a sludge or by a dissolved air flotation (DAF) method, where the floc is floated to the liquid surface by the injection of a saturated air/water solution under pressure to produce micro air bubbles which attach themselves to the flocs and raise them to the liquid surface, to be removed as a sludge. The sludge principally comprises elements of the added chemicals combined with the impurities removed from the raw water. Then the water is filtered through sand filters to remove floc that has not been removed in the settlement or DAF stages and is carried-over.

After filtration, the water is usually disinfected by the addition of chlorine.

Unfortunately, this method of treatment requires very careful monitoring and control and precise operational discipline to obviate the real risk of chemical carry over in the treated water stream, most prominent of these being increased concentration of aluminium in the treated water as a result of the addition of the aluminium sulphate as a coagulating agent.

There have been several incidents where excessive levels and concentrations of aluminium and aluminium sulphate have been carried over into the drinking water supply and these incidents have occurred on large sophisticated continually manned water treatment plants.

The operators of these plants typically undergo a continuous training programme and despite these safeguards incidents still occur due to the human interface required.

Another major consideration is the handling and disposal of metal laden hazardous sludges. Unlike sludge residues produced from biological treatment systems which may be disposed of to agriculture for beneficial use, metal laden sludges may not, due to the high concentration of metals, for example aluminium in a readily leachable form. The only route for disposal of these sludges at present is by controlled landfill, which is becoming a decreasingly available option.

Again, as mentioned above, the presence of harmful pathogens is a matter of serious concern and ideally any sludge should be totally sterile and should then be recyclable.

Ideally, there is a need for a system which obviates the need for chemicals, or at least to ensure that whatever chemicals are used that they will not impact on the drinking water and therefore anything that is used must decompose naturally into either water or oxygen, neither of which are harmful. It is vital that any of the treatment processes used does not lead to the production of toxic by-products.

### Statements of Invention

According to the invention there is provided a method of purifying surface water comprising the steps of: ETC. AS CLAIM 1. The advantages of this method are many. It will be appreciated that any surplus ozone is used to sterilise the sludge and thus the problems associated with harmful pathogens in the sludge are avoided. Further, by using the using the surplus ozone the cost of operation of the plant is reduced in that all the ozone generated is gainfully used. A further advantage of the present invention is that there are no chemicals of a harmful nature used in the process. Another advantage is that power consumption is reduced to a minimum in that the process operates as a closed loop system so there are no situations where, for example, pressure is applied and then pressure is reduced so that with consequent energy consumption the pressure has to be reapplied.

Ideally the back-washing water ETC AS CLAIM 2. The advantage of this is that it further increases the enclosed loop nature of the process. While, for example, the back-washing water could be supplied from the surface water, it is better to achieve the back-washing with the cleanest possible water.

Ideally the back-washing water ETC AS CLAIM 3. Since as has been explained already the suspended sludge has been sterilised by the surplus ozone in the sludge tank, this sludge is ideal for dewatering and further use. Preferably the filtrate from the dewatering step is fed to the initial filter thus ensuring that all the water used is discharged as clean water.

Ideally the ozone is applied at a rate of at least 5 mg/l to the initial filtrate in the ozone reactor vessel, may be applied at a rate of over 10 mg./l and is in some circumstances applied at a rate of 15 mg/l. To a certain extent the rate of application will depend on the colour of the surface water and the impurities contained therein. While it would appear that the production of surplus ozone is not to be encouraged, it has to be appreciated that the surplus ozone is subsequently used to sterilise the sludge and thus effectively it is not lost and by having an ability to reuse the ozone and to ensure that the sludge will absorb and nullify the ozone, the risk of ozone poisoning is obviated.

Ideally the ozone injection takes place under a pressure exceeding 3 bar and may be as high as 7 bar.

Ideally the initial filtrate is retained ETC. AS CLAIM 11. This ensures that the reaction is efficiently carried out.

In one method according to the invention, prior to injecting ozone, ETC. AS CLAIM 12. Since hydrogen peroxide does not cause harmful contaminants and will decompose into water and oxygen it is thus effectively a chemical free process in the sense that there are no chemicals added which can impact harmfully on either the suspensions or the water itself.

Further the invention provides a surface water purification plant ETC. AS CLAIM 14. The advantage of this plant is that it is an enclosed loop plant and this can mean instead of a multiplicity of pumps, one pump can effectively operate the whole plant. This has considerable cost and other savings.

In one embodiment of the invention the initial filter assembly comprises ETC. AS CLAIM 15. The advantage of this is that it is a readily easily cleaned filter and is particularly suitable for continuously running plants such as provided by the present invention.

In one embodiment of the invention the sludge tank is connected ETC. AS CLAIM 16. This particular form of dewatering plant is particularly suitable in that since the sludge produced has been totally sterilised by the surplus ozone, the production of the sludge in bags means it can be delivered as a suitable fertiliser or non-toxic landfill without the need for further processing. Further handling is not a health hazard.

The actual amount of solids produced is typically relatively small in that they would comprise about 20 mg of solids.

However, since the dewatered solids are a very useful growing medium in almost any situation, it is preferable to use this environmentally friendly by-product for subsequent beneficial use. This is in direct contrast to the sludge produced in known methods of water treatment which cannot be reused by application to the land under restrictions imposed by various EU, Governmental and Environmental Agencies.

### Detailed Description of the Invention

The invention will be more clearly understood from the following description of an embodiment thereof, given with reference to the accompanying drawings in which:
Fig. 1 is a diagrammatic flow diagram of the plant carrying out the method according to the invention; and
Fig. 2 is a front view of a dewatering plant used with the invention.

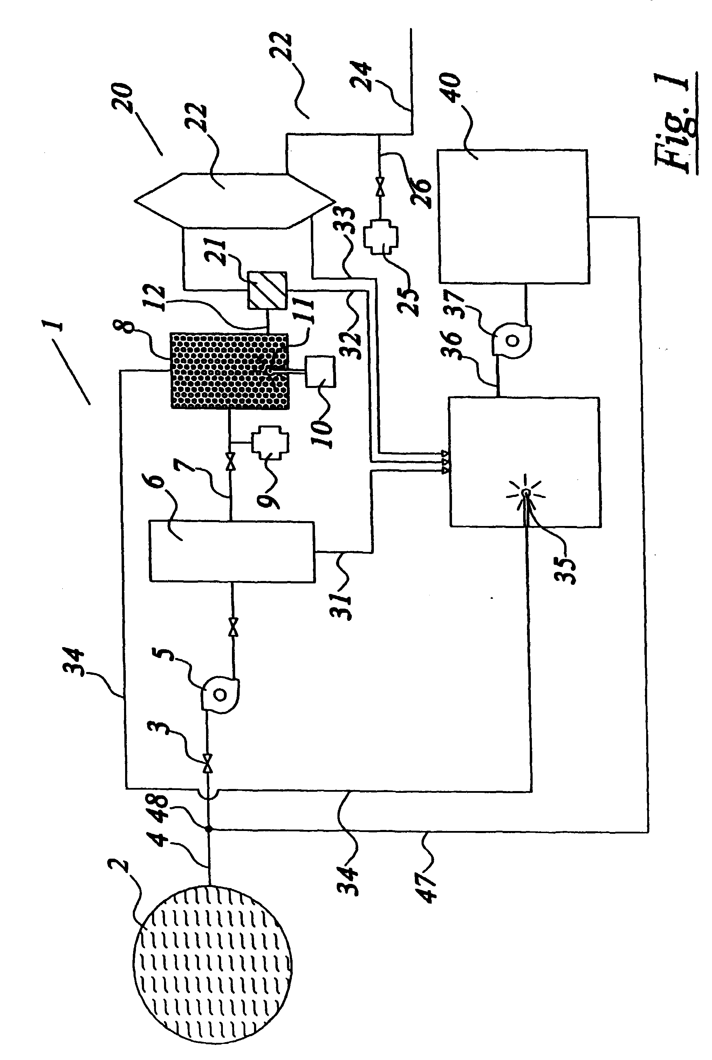

Referring to the drawings and initially to Fig. 1 thereof, there is illustrated in partially stylised form the method of purifying surface water according to the invention and the plant for carrying out the method. There is illustrated a surface water purification plant 1 for a lake 2. A surface water inlet 3 of a feed water pipe 4 incorporating a pump 5 connects the water in the lake 2 to a micro filter 6 forming an initial filter assembly. The micro filter 6 is a disc filtration system which is not illustrated in detail. The disc filtration system comprises a plurality of annular discs having grooved contacting surfaces pressed together, defining a filtration path between the periphery of the pressed discs and a central bore formed therein and in which means for back-flushing is provided whereby the discs are released so that they no longer press together and the previously filtered water is delivered in a reverse direction to the discs so as to rotate the discs and back-flush the filter. This is a relatively rare construction of filter which has been found particularly suitable for use with the present invention. One of its major advantages is that it can handle a wide range of sizes down to 5 microns or less. However, since it is already a conventional piece of equipment it is not described in more detail.

The micro filter 6 is connected by an initial filtrate feed pipe 7 to a sealed ozone reactor vessel 8. A hydrogen peroxide dosing tank 9 is connected to the initial filtrate feed pipe 7. An ozone generator 10 feeds the ozone reactor vessel 8 through an ozone injector nozzle 11. The ozone reactor vessel 8 feeds through a feed pipe 12 a final filter assembly indicated generally by the reference numeral 20.

The final filter assembly 20 in this embodiment comprises a multi-media filter 21 connected to a carbon filter 22. The final filter assembly 20 feeds an output pipe 23 having a final filtrate outlet 24. A disinfectant dosing tank 25 is connected to the output pipe 23 by a further pipe 26. The sludge tank 30 is fed from the micro filter 6, the multimedia filter 21 and the carbon filter 22 by return pipes 31, 32 and 33 respectively. The sludge storage tank 30 is connected by a surplus ozone delivery pipe 34 to the ozone reactor vessel 8 through an injector nozzle 35. The sludge storage tank 30 is connected by a further feed pipe 36 and pump 37 to a dewatering plant indicated generally by the reference numeral 40.

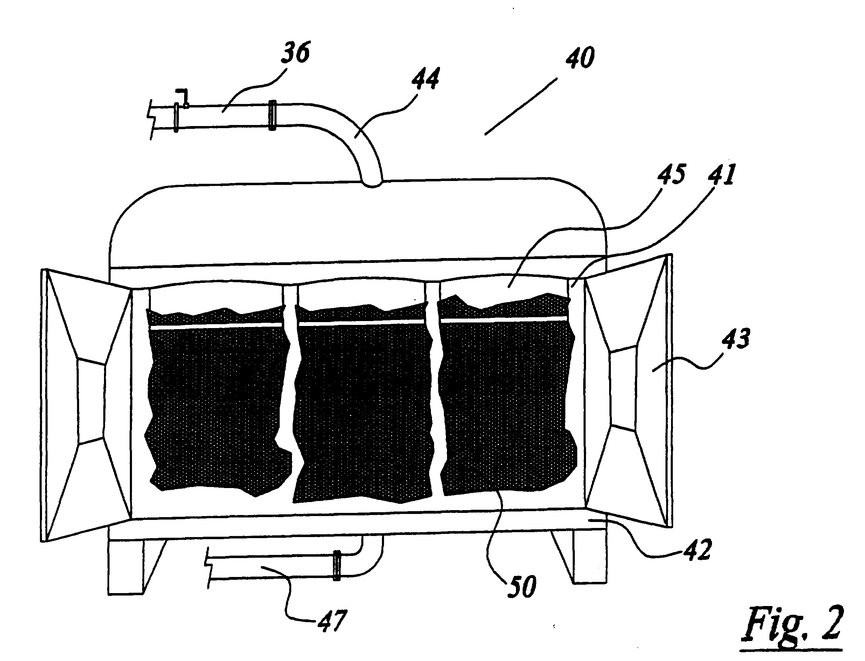

Referring now to Fig. 2 there is illustrated the dewatering plant 40 which comprises a tank 41 having a sump 42 and doors 43. The dewatering plant 40 includes a sludge and back-washing water inlet 44 fed from the feed pipe 36. The tank 41 carries a number of filter bag connectors 45 for securing a filter bag identified by the reference numeral 50 thereto. The filter bag 50 can be of any suitable construction and will generally rest as it is loaded into the sump 42. The sump 42 has a sump outlet 46 which is connected via an outlet pipe 47 to the feed water pipe 4 at 48.

In use, water is drawn from the lake 2 through the surface water inlet 3 and feed water pipe 4 to the micro filter 6 by the pump 5. The micro filter 6 is set to remove all particulate matter above 5 microns. The filtrate from the micro filter 6 is delivered through the initial filtrate feed pipe 7. While being delivered through initial filtrate feed pipe 7 hydrogen peroxide is delivered out the dosing tank 9 to mix with the initial filtrate. The initial filtrate and hydrogen peroxide are then delivered into the ozone reactor vessel 8. The ozone generator 10 delivers through the ozone injector nozzle 11 ozone into the ozone reactor vessel 8 and the initial filtrate is held in the ozone reactor vessel 8 for a rest time of approximately 5 minutes and the ozone reactor vessel 8 is maintained at a pressure of 7 bar gauge. The contents of the ozone reactor vessel 8 are then delivered through the feed pipe 12 to the final filter assembly 20 first going through the multi-media filter 21 and then the carbon filter 22 to the output pipe 23 into which is injected from the disinfectant dosing tank 25 chlorine through the pipe 26. The chlorine dosed final filtrate is then delivered out the final filtrate outlet 24.

When the dosing in the ozone reactor vessel 8 is completed surplus ozone is delivered through the surplus ozone delivery pipe 34 to the sludge storage tank 30 where the surplus ozone is injected through the injector nozzle 35 into the sludge storage tank 30 which is filled periodically by particulate matter and flocs from multi media filters 21 and carbon filter 22 through the return pipes 31, 32 and 33. The surplus ozone reacts with the particulate matter which has not been treated as it was removed at the initial filtration stage and the contents of the sludge storage tank 30 are disinfected. Subsequently the contents are delivered to the dewatering plant 40. In the dewatering plant 40 the sludge and water is delivered into the filter bags 50 where water seeps into the sump 42 where it is delivered through the sump outlet 46 to a return pipe 47 which feeds into the feed water pipe 4 at 48. The almost totally dry sludge for air drying 50% water can then be removed in the bags 50.

The back washing water for the various filters may be provided for example, by surface water, but is more preferably provided by final filtrate which is fed back into the various filters, however, this is not shown in the drawings as it would simply confuse the description.

The residence time in the ozone reactor vessel is entirely dependent on the contaminants present and it will be varied as appropriate.

It will be appreciated that the use of hydrogen peroxide is optional.

Further while in the embodiments described above, the time spent in the ozone reactor vessel was approximately 5 minutes that other times may be used.

Similarly while the ozone reactor vessel was held at 7 bar, the pressure can be anything between 3 and 10 bar.

While in the embodiment described above the filter washings have been delivered to the sludge collector, strictly speaking they could be recycled in to the lake, or indeed to any source of surface water.

It is also envisaged that while the sludge could be used as landfill in the sense that it does not have any harmful metals or chemicals contained therein, other than what was already contained in the lake. It is envisaged that it may be better to gather the various filtrates as described above and when bagged to use them as fertiliser. Generally the amount of solid dry matter would be of the order of 0.1 to 0.5% dry solid by weight.

It is envisaged that somewhat of the order of 0.7 mg of ozone/I will be injected into the ozone reactor vessel, but this could be as high as 15 or 20 mg. There is no great problem in using surplus ozone since the ozone is subsequently used to sterilise the sludge.

The following is one example of a test carried out:

| **TEST-LAKE EMMY** | |
|---|---|
| Initial Colour | > 130 mg/l |
| Throughput | 100 cu.m/hr |
| Ozone | 4.2 g/hr |
| Hydrogen Peroxide | 1.68 g/hr |
| Final Colour | <20 mg/l |

There are considerable advantages with the present invention in that by using no chemical that would cause pollution, one of the principal disadvantages of the present systems has been overcome. For example, the only chemical that may be used is hydrogen peroxide, indeed the only treatment is either ozone or the addition of hydrogen peroxide. Ozone has no toxic oxidation by-products, while hydrogen peroxide will decompose into water and oxygen, thus effectively it is a chemical-free process in the sense that there are no chemicals added that in any way impact on either the sludge, the water itself, or the environment.

We have found that dependent on raw water quality, mixed media such as anthracites and sand filter after the ozone treatment and prior to the carbon filtration is ideal. It is preferably to present the carbon filter with as clean a water as possible as this reduces back-washing of the carbon filter.

It will be appreciated that the amount of ozone injected is related to the colour of the raw water and the chemical oxygen demand of the raw water and suspended solids. Therefore, it is necessary for each application to carry out an analysis of the water to select the best filtration system, the optimum ozone and hydrogen peroxide dosage requirements if required.

Generally, hydrogen peroxide will not be required and will be used mainly where the coloration is above 70 mg/l.

In many instances, the colour of water can be as high as 120 mg/l and a chemical oxygen demand of up to 50 mg/l may be required.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

## Claims

1. A method of purifying surface water comprising the steps of:
carrying out an initial filtering of the raw water in an initial filter assembly to obtain an initial filtrate and sludge;
back washing the initial filter assembly;
delivering the back-washing water and sludge to a sludge tank;
delivering the initial filtrate from the initial filter assembly to an ozone reactor vessel;
injecting ozone into the initial filtrate in the ozone reactor vessel;
delivering the contents of the ozone reactor vessel to a final filter assembly to obtain a final filtrate and sludge;
back-washing the final filter assembly;
delivering the back-washing water and sludge to the sludge tank;
collecting the surplus ozone which has not reacted with the initial filtrate in the ozone reactor vessel;
delivering the surplus ozone to the sludge tank;
injecting the surplus ozone into the back-washing water and sludge in the sludge tank; and
delivering the final filtrate to output.

2. A method of purifying surface water as claimed in claim 1 in which the back-washing water is supplied by the final filtrate.

3. A method of purifying surface water as claimed in claim 1 or 2 in which the backwashing water and suspended sludge are removed from the sludge tank after being treated with the surplus ozone and subjected to a further dewatering step.

4. A method of purifying surface water as claimed in claim 3 in which the filtrate from the dewatering step is fed to the initial filter assembly.

5. A method of purifying surface water as claimed in any preceding claim in which the ozone is applied at a rate of at least 5 mg/l to the initial filtrate in the ozone reactor vessel.

6. A method of purifying surface water as claimed in any preceding claim in which the ozone is applied at a rate of at least 10 mg/l to the initial filtrate in the ozone reactor vessel.

7. A method of purifying surface water as claimed in any preceding claim in which the ozone is applied at a rate of at least 15 mg/l to the initial filtrate in the ozone reactor vessel.

8. A method of purifying surface water as claimed in any preceding claim in which in the initial filtering assembly particulate matter above 5 microns is removed.

9. A method of purifying surface water as claimed in any preceding claim in which the ozone injection takes place under a pressure exceeding 3 bar.

10. A method of purifying surface water as claimed in any preceding claim in which the ozone injection takes place under a pressure exceeding 7 bar.

11. A method of purifying surface water as claimed in any preceding claim wherein the initial filtrate is retained in the ozone reactor vessel for a residence time of not less than 5 minutes.

12. A method of purifying surface water as claimed in any preceding claim wherein prior to injecting ozone into the reactor vessel the additional step is carried out of adding hydrogen peroxide.

13. A surface water purification plant for carrying out the method as claimed in any preceding claim comprising a closed loop assembly including:
a surface water inlet;
a final filtrate outlet;
an initial filter assembly connected to the water inlet;
a sealed ozone reactor vessel fed by filtrate from the initial filter assembly;
an ozone generator feeding the ozone reactor vessel through an injector nozzle;
a final filter assembly fed by the ozone reactor vessel and feeding the final filtrate outlet;
a sludge tank connected to the initial and final filter assemblies; and
an ozone feed pipe connecting the ozone reactor vessel and the sludge tank.

14. A surface water purification plant as claimed in claim 13 in which the initial filter assembly comprises a disc filtration system comprising a plurality of annular discs having grooved contacting surfaces pressed together, defining a filtration path between the periphery of the pressed discs and a central bore formed therein and in which means for back-flushing is provided whereby the discs are released from contact and the previously filtered water is delivered in a reverse direction to the discs so as to rotate the discs and back-flush the filter.

15. A surface water purification plant as claimed in claim 13 or 14 in which the sludge tank is connected to a dewatering plant comprising:
a tank including a water collection sump;
a sludge and back-washing water inlet;
a filter bag connector having an inlet mouth and a connector for securing a filter bag above the sump; and
a filtrate return pipe connecting the sump and the initial filtrate assembly.
